Europäisches Patentamt

**European Patent Office**

**Office européen des brevets**

(11) Numéro de publication: **0 246 991**

**A1**

(12) **DEMANDE DE BREVET EUROPEEN**

(21) Numéro de dépôt: **87450011.9**

(22) Date de dépôt: **17.04.87**

(51) Int. Cl.³: **H 01 S 3/02**
**F 41 G 3/26**

(30) Priorité: **18.04.86 FR 8606068**

(43) Date de publication de la demande:
**25.11.87 Bulletin 87/48**

(84) Etats contractants désignés:
**AT CH DE ES GB IT LI SE**

(71) Demandeur: **Soucaze-Soudat, Jean**
**Ste Marie de Campan**
**F-65710 Campan(FR)**

(72) Inventeur: **Soucaze-Soudat, Jean**
**Ste Marie de Campan**
**F-65710 Campan(FR)**

(54) Emetteur laser portable et autonome.

(57) La présente invention concerne un émetteur laser portable et autonome comprenant une source émettrice d'un rayon laser, un réducteur de divergence de faisceau, une visée optique, et une alimentation portable à commutations temporaires.

Ce dispositif comporte essentiellement un bati intermédiaire 2 de forme cylindrique contenant dans un logement allongé 15 un émetteur laser 3, prolongé par un réducteur de divergence de faisceau 1. Une visée optique par lunette 5 est fixée sur le bati 2 par une fixation réglable 4. L'ensemble de ces éléments est fixé mécaniquement sur la crosse 7. Une alimentation par cablage électrique 6.14 20 est assurée en provenance d'un sac 9 comprenant un accumulateur électrique 10, une alimentation électrique 11, un amplificateur de courant 12. Le calage est assuré par de la mousse synthétique 16. Un interrupteur 8 est monté sur la crosse, les fils étant connectés de façon démontable par des connexions 13 23.

Applications aux télécommandes, illuminations et éblouissements divers.

./...

Fig: 1

La présente invention concerne un émetteur laser portable et autonome comprenant une source émettrice d'un rayon laser, un réducteur de divergence du faisceau, une visée optique et une alimentation électrique portable à commutations temporaires.

Il existe des dispositifs de visée à laser ainsi que des systémes de télémesures. On connait déjà des émetteurs laser dont il est possible d'user sans avoir une alimentation électrique fixe, mais ceux-ci sont soit montés sur des véhicules lourds avec visée adjacente, soit mobiles mais avec une alimentation électrique faible qui interdit d'utiliser le laser au maximum de sa puissance.

La présente invention se propose de remédier à ces inconvénients en réalisant un dispositif tel que sus-mentionné qui puisse délivrer en un point donné et désigné par l'utilisateur, durant un laps de temps une énergie laser pouvant être décellée par des systémes optiques ou autres, ceux-ci pouvant être de diverses sortes.

Dans ce but, la présente invention est caractérisée en ce que la source émettrice du rayon laser, le réducteur de divergencede faisceau et la lunette de visée, au moins, sont agencés de telle sorte qu'ils aient leurs surfaces de références en liaison avec le bati intermédiaire, le systéme de fixation de la lunette de visée étant un dispositif de positionnement et d'alignement, réglable selon deux directions perpendiculaires, l'alimentation électrique nécessaire au fonctionnement de l'émetteur laser étant agencée de telle sorte qu'elle soit portable et facilement connectable aux piéces susnommées.

Les avantages obtenus grace à cette invention constituent en ceci que les organes de maintien de l'émetteur laser sont fixés sur le bati intermédiaire, celui-ci supportant aussi les organes de maintien de la lunette de visée, ces derniers étant réglables et pouvant assurer de ce fait un bon parallélisme entre le faisceau laser émis et la ligne de mire de la lunette de visée.

L'adjonction d'un réducteur de divergence du faisceau laser, permet de diminuer la surface de la tache laser émise et augmenter ainsi l'énergie fournie ponctuellement.

L'énergie électrique portable, regroupée dans un emballage de transport désolidarisé mécaniquement et électriquement, à volonté, de l'ensemble émetteur permet de stocker une plus grande quantité d'énergie dans des accumulateurs. L'émission du faisceau laser est déclenchée grace à une action manuelle ou non, exécutée sur l'interrupteur "queue de détente" et ce à volonté, aprés que l'opérateur ait visé la cible déterminée à l'avance.

On comprendra mieux la présente invention à la lecture de la description détaillée qui va suivre faite en regard des dessins annexés et donnant à titre indicatif mais nullement limitatif une forme de réalisation de l'invention.

Sur les dessins :

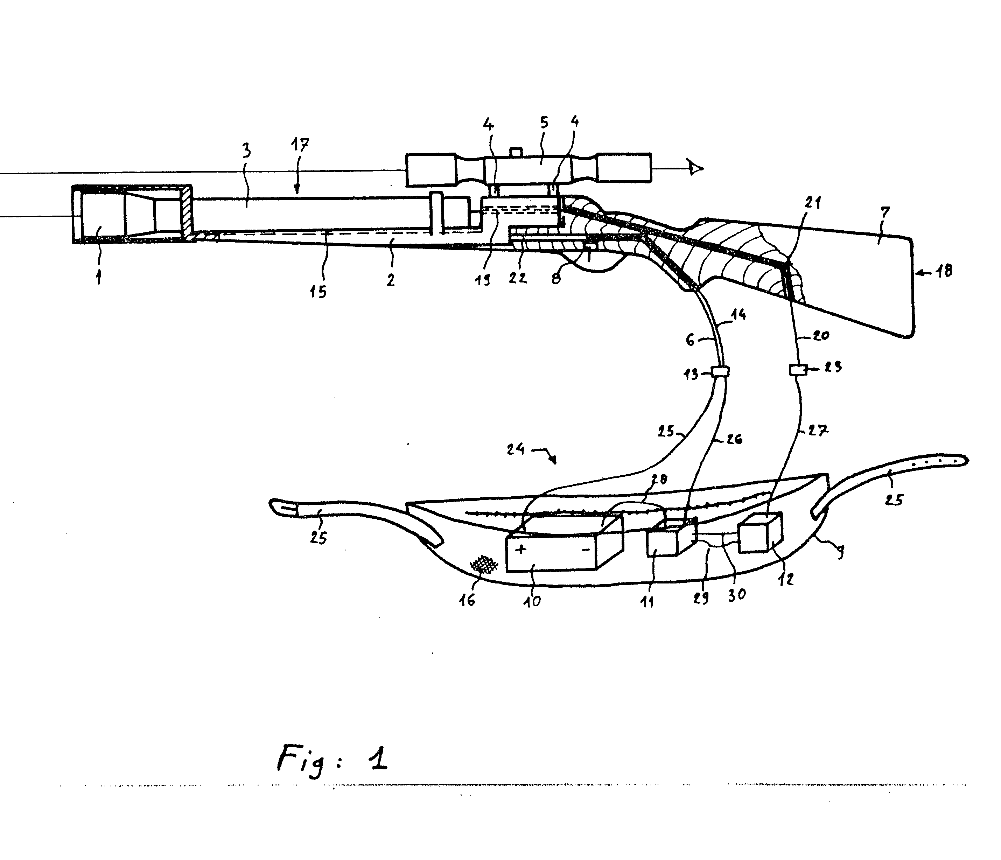

- la figure I représente à echelle réduite, une vue schématique de l'ensemble des dispositifs.

En référence à la figure I, le dispositif d'émission laser désigné par la référence générale I7, est monté sur une crosse de fusil désignée par la référence générale I8, qui, dans l'exemple représenté est dérivée des armes à feu courantes.

A l'extrémité antérieure de la crosse 7 il est monté le bati intermédiaire 2 , celui-ci étant fixé de maniére classique sur sa crosse support.

Le bati intermédiaire, de forme allongée comporte dans sa plus grande longueur un logement I5 dans lequel vient reposer l'émetteur laser 3 . Les fixations de l'émetteur sur le bati 2,sont agencées de telle maniére que celles-ci assurent une solidarité absolue mais aussi une interchangeabilité et des démontages faciles. Le logement du bati se prolonge dans sa partie antérieure en une forme circulaire enveloppante destinée à protéger des chocs le réducteur de divergence de faisceau I . Dans sa partie postérieure, et ceci en son milieu, le bati comporte une ouverture I9 destinée à laisser passer le conducteur d'alimentation 20 de la source laser.

Sur le dessus du bati intermédiaire il est fixé une lunette de visée 5 par l'intermédiaire d'un dispositif de positionnement et d'alignement 4 lequel dispositif ou mécanisme à vis micrométriques est destiné à positionner et a aligner le dispositif de visée dit lunette de visée, par rapport au faisceau laser émis et ce afin d'assurer une visée correcte.

La source émettrice laser 3 comporte à son extremité antérieure un réducteur de divergence de faisceau I , lequel à pour but de diminuer l'angle de divergence du faisceau émis afin de réduire le diamétre de la tache laser. .

La crosse 7 supportant le bati 2 est agencée de telle sorte qu'un opérateur puisse manier aisément l'ensemble constitué. Sur celle-ci est disposé un interrupteur 8 lequel est branché à des conducteurs 6 et I4, ceux-ci assurant le transport de l'énergie électrique. La crosse est traversée par une ouverture 2I afin de laisser passer le conducteur d'alime--ntation 20, et par une ouverture 22 afin de laisser passer les conducteurs 6 et I4 . Des connections électriques démontables I3 et 23 sont agencées de telle sorte qu'elles soient facile--ment utilisables sans emploi d'outillage spécifique.

En référence à la figure I, le dispositif d'alimentation autonome d'énergie électrique 24 est inséré à l'intérieur d'un sac de transport 9 . Celui-ci ayant pour particularité d'étre transportable par un homme quels que soient ses agencements intérieurs et extérieurs, pouvu qu'il soit muni de bretelles ou sangles 25 .

Le sac de transport 9 permet le transport du ou des accumulateurs électriques IO, de l'alimentation électrique II et de l'amplificateur I2 ainsi que des conducteurs et connexions associés à l'ensemble : 25 26 27.

Le ou les accumulateurs électriques IO de conce-ption connue sont reliés aux conducteurs 25 et 28 suivant les régles de l'art par connexions classiques .

L'alimentation électrique II et l'amplificateur I2 sont reliés aux conducteurs 26 27 28 29 30 par des bornes de connexion isolées les unes des autres, démontables ou non de façon à ce que les liaisons électriques soient assurées dans tous les cas . Les conducteurs 25 27 26 sont réalisés de telle sorte qu'ils puissent s'adapter sur les connexions électriques démontables I3 et 23 .

L'ensemble des éléments constitutifs de l'alimentation autonome d'énergie électrique 24 sont calés avec une mousse type polyéthylène I6 ou tout autre matériau assurant un bon positionnement relatif et des séparations entre eux, afin qu'ils ne soient jamais en contact et que les conducteurs électriques puissent facilement les relier .

4

La présente invention est avantageuse du fait que tous les éléments assurant l'alimentation électrique sont désolidarisés mécaniquement de l'ensemble visée et émission laser, tout en assurant une alimentation électrique correcte, fournie par les conducteurs en provenance de l'alimentation autonome d'énergie électrique. De ce fait l'encombrement des accumulateurs et appareils de transformation de courant, peut augmenter sans affecter de façon grossiére le poids,l'encombrement et la maniabilité du dispositif d'émission laser.

Il va de soi que l'invention à été décrite ci-dessus à titre d'exemple préférentiel indicatif mais nullement limitatif et que l'on pourra introduire toute équivalence dans ses éléments constitutifs sans sortir de son cadre défini par les revendications annexées .

## REVENDICATIONS

I Emetteur laser portable et autonome comprenant une source émetrice d'un rayon laser, un réducteur de divergence de faisceau, une visée optique et une alimentation portable à commutations temporaires, caractérisé en ce que la source émettrice du rayon laser et la lunette de visée, au moins, sont agencés de telle sorte qu'ils aient leurs surfaces de références en liaison avec un bati intermédiaire, le système de fixation de la lunette de visée étant un dispositif de positionnement et d'alignement, réglable selon deux directions perpendiculaires.

2 Emetteur selon la revendication I, caractérisé en ce que la divergence du faisceau laser est réduite par l'adjonction d'un réducteur situé aprés la source laser.

3 Emetteur selon la revendication I, caractérisé en ce que la source de tension d'alimentation est logée dans un sac de transport .

4 Emetteur selon la revendication I, caractérisé en ce que la source de tension d'alimentation est constituée par un ou plusieurs accumulateurs électriques .

5 Emetteur selon la revendication I, caractérisé en ce que l'émission est déclenchée à partir d'un interrupteur fixé sur la crosse .

6 Emetteur selon la revendication I, caractérisé en ce que la crosse et le bati comportent des logements destinés au passage des conducteurs .

7 Emetteur selon la revendication I, caractérisé en ce que le bati intermédiaire comporte une forme circulaire enveloppante pour la protection du réducteur de divergence et de la source laser .

8 Emetteur selon la revendication I, caractérisé en ce que les liaisons électriques entre le dispositif d'émission laser et l'alimentation autonome d'énergie sont assurés au moyen de conducteurs électriques souples .

9 Emetteur selon la revendication 8, caractérisé en ce que les liaisons entre les conducteurs dépendant du dispositif d'émission laser d'une part, et l'alimentation électrique d'autre part, sont assurées par des connexions, démontables sans outillage spécifique .

10 Emetteur selon la revendication 3, caractérisé en ce que le calage des éléments est réalisé en matiére synthétique souple .

11 Emetteur selon la revendication 3, caractérisé en ce que la source d'alimentation comprend au moins un ou plusieurs accumulateurs, une alimentation électronique convertisseur de tension, un circuit électronique amplificateur de tension, des éléments de commutations .

12 Emetteur selon la revendication 1, caractérisé en ce que la source émettrice du rayon laser, la lunette de visée et le bati intermédiaire sont fixés sur une crosse type crosse d'arme .

13 Emetteur selon la revendication 1, caractérisé en ce que la fixation de la source laser sur le bati intermédiaire se fait par vis ou vis plus écrous ou colliers ou demi-colliers ou collage et ceci à chaque extrémité de la source .

14 Emetteur selon la revendication 1, caractérisé par le fait que l'alimentation électrique portable peut étre remplacée par une alimentation électrique non portable .

Fig: 1

1/1

0246991

# RAPPORT DE RECHERCHE EUROPEENNE

Office européen
des brevets

EP 87 45 0011

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | DE-B-2 754 109 (PRECITRONIC)<br>* Revendication 1; figures 1-3 * | 1 | H 01 S 3/02<br>F 41 G 3/26 |
| Y | US-A-3 392 261 (SCHOLLHAMMER)<br>* Figure 1; colonne 4, lignes 55-74; revendication 1 * | 1 | |
| A | | 3,5-9,<br>12,14 | |
| Y | MANUFACTURING TECHNOLOGY NOTE - U.S. ARMY MATERIEL DEVELOPMENT AND READINESS COMMAND, report no. TR-7264, juin 1979, filing code 46C.005, NTN-79/0322, Office of Manufacturing Technology, Alexandria, Virginia, US; D. SALOMINER: "Photoflash-pumped hand-held laser"<br>* En entier * | 1 | |
| A | IDEM | 2,4,5,<br>7,9,12 | |
| A | US-A-4 276 520 (ROSENBERG)<br><br>* Figures 1,2,8; revendication 1 * | 1,5,7,<br>8,11,<br>12,14 | |

DOMAINES TECHNIQUES RECHERCHES (Int Cl 4)

H 01 S
F 41 G

--- -/-

Le présent rapport de recherche a été établi pour toutes les revendications

| Lieu de la recherche | Date d'achèvement de la recherche | Examinateur |
|---|---|---|
| LA HAYE | 29-07-1987 | FARNESE G.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen
des brevets

**RAPPORT DE RECHERCHE EUROPEENNE**

Numero de la demande

EP  87 45 0011

| | **DOCUMENTS CONSIDERES COMME PERTINENTS** | | Page  2 |
|---|---|---|---|
| Catégorie | Citation du document avec indication, en cas de besoin, des parties pertinentes | Revendication concernée | CLASSEMENT DE LA DEMANDE (Int Cl 4) |
| A | US-A-3 478 278  (MUNCHERYAN)<br>* Figures 1-3,6; colonne 1, ligne 37 - colonne 2, ligne 22 * | 1-14 | |
| A | US-A-3 865 491  (HOGAN)<br>* Abrégé; figures 1,3,5,8-10; revendications 1,10 * | 1-14 | |
| A | US-A-4 317 304  (BASS)<br>* Revendication 1; figures 1,2 * | 1 | |
| A | US-A-4 429 468  (JIMENEZ et al.)<br>* Colonne 1, lignes 29-40 * | 1 | |
| | ----- | | |

DOMAINES TECHNIQUES
RECHERCHES (Int Cl 4)

Le présent rapport de recherche a été établi pour toutes les revendications

| Lieu de la recherche | Date d'achèvement de la recherche | Examinateur |
|---|---|---|
| LA HAYE | 29-07-1987 | FARNESE G.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié a la date de dépôt ou après cette date
D : cité dans la demande
L : cité pour d'autres raisons

& : membre de la même famille, document correspondant

OEB Form 1503 03 82